# EUROPEAN PATENT APPLICATION

(11) **EP 4 030 380 A1**
(43) Date of publication of application: **20.07.2022**
(21) Application number: 21214239.2
(22) Date of filing: 14.12.2021
(51) Int. Cl.: G06T 7/00, G06T 7/10

(54) **CHARGED PARTICLE MICROSCOPE SYSTEMS AND CLUSTERING PROCESSES FOR HIGH DYNAMIC RANGE SAMPLE ANALYSIS**

(30) Priority: 30.12.2020 US 202017138573
(71) Applicant: FEI Company, Hillsboro, OR 97124-5793 (US)
(72) Inventor: Owen, Michael, 5602 BS Eindhoven (NL); Levien, Cody, 5602 BS Eindhoven (NL); Howell, Garth, 5602 BS Eindhoven (NL); Tuma, Tomás, 5602 BS Eindhoven (NL)
(74) Representative: Janssen, Francis-Paul

(57) **Abstract**

Methods and systems for high dynamic range (HDR) charged particle analysis using clustering processes include accessing a plurality of instances of image data for a region of a sample, where each instance of image data was captured with different parameters by a charged particle microscope. The difference in parameters may include one or more of a difference in contrast, brightness, beam strength, beam type, gamma, and/or a combination thereof. An HDR charged particle microscopy data structure is then generated using the captured image data, and one or more features of the sample are identified based on the HDR charged particle microscopy data structure. In some methods according to the present invention, the methods further include performing EDS analysis on the sample based on the determined one or more identified features.

## Description

### BACKGROUND OF THE INVENTION

In charged particle imaging, a region of a sample is irradiated with a charged particle beam (e.g., an electron beam), and an image of the region is generated based on emissions generated by the sample due to the irradiation. For example, in electron imaging a region of the sample is irradiated with an electron beam, imaging data is generated based on emissions (e.g., backscatter electrons) emitted by the sample responsive to this irradiation, and the imaging data is used to generate an image of the region of the sample. Because different elements/molecules generate different characteristic emissions, the charged particle microscope system is able to generate an image of a region of the sample by scanning the charged particle beam across the surface of the sample and assigning a pixel value to each pixel of the image based on the emissions emitted from the corresponding part of the sample.

However, current charged particle imaging struggle to differentiate between elements/molecules generate very similar emissions despite having very different chemistries. For example, while quartz (SiO₂) and albite (NaAlSi₃O₈) have drastically different chemistries, their average atomic numbers that are almost equal. Thus, as the quantity of backscatter electrons an element/molecule/material emits is directly related to the atomic number of the element/molecule, in electron backscatter imaging it is very difficult to differentiate quartz deposits from a sample from albite deposits. This difficulty causes automated segmentation algorithms and/or non-expert human operators to identify adjacent deposits of albite and quarts as a single deposit.

When the composition of a sample is known before imaging, the parameters of the charged particle microscope can be preselected so that transitions between materials known to be present in the sample can be identified. For example, the contrast of the microscope detectors can be adjusted such that the images generated by the charged particle system are able to see anticipated material transitions that would be otherwise difficult to detect. While preselecting charged particle microscope parameters in this way can make subtle material transitions visible in generated images, it can also cause other regions of the image to be washed out to white or black. Because of this, if the composition of a sample is unknown, a user is not able to preselect the charged particle microscope parameters as the user cannot know what parameters are optimal for the sample composition (e.g., could include carbon based materials, uranium based materials, both, etc.). Thus, there is a desire for charged particle microscopes and imaging processes that are able to capture images that differentiate between different materials and/or features regardless of sample composition.

A specific application where this is desirable is in Energy Dispersive X-Ray Spectroscopy (EDS or EDX), where the composition of a sample is determined by irradiating portions of the sample and determining the corresponding composition based on the spectroscopic information captured by the system. To avoid the need to irradiate each portion of the sample current EDS processes require an expert user to select a pattern of irradiation locations that allow for composition information for desired materials in the sample are obtained. Because the composition of samples in EDS are generally not known, the parameters of charged particle microscope that generate initial images of the sample cannot be preselected so as to make it easy for users/algorithms to determine optimal patterns of irradiation locations. Thus, it is also desired for charged particle microscopes and imaging processes that are able to make it easy for users/algorithms to determine optimal patterns of irradiation locations.

### SUMMARY OF THE INVENTION

Methods and systems for high dynamic range (HDR) charged particle analysis using clustering processes are disclosed herein. Methods include accessing first image data for a first image of a region of a sample and second image data for a second image of the region of the sample, where each image data was captured with different parameters by a charged particle microscope. In various embodiments, the difference in parameters may include one or more of a difference in contrast, brightness, beam strength, beam type, gamma, and/or a combination thereof. Additionally, the invention is not limited to only two instances of image data, but rather can include embodiments where any plurality of images are captured (in parallel, series, or a combination thereof) where each instance of image data was captured with different charged particle microscope parameters. An HDR charged particle microscopy data structure is then generated using the captured image data, and one or more features of the sample are identified based on the HDR charged particle microscopy data structure. In some methods according to the present invention, the methods further include performing EDS analysis on the sample based on the determined one or more identified features.

Systems for HDR charged particle analysis using clustering processes according to the present disclosure, comprise a sample holder configured to support a sample, a focused charged beam source configured to apply a focused charged beam to the sample, and a detector system configured to detect emissions from the sample due to irradiation with the charged particle beam source. The systems further include one or more processors, and a memory storing non-transitory computer readable instructions, that when executed by the one or more processors, cause the microscope system to implement artificial intelligence to irradiate the sample with the focused charged beam and capture a plurality of images of a region of the sample, where each image of the plurality of images have different parameters. The instructions further cause an HDR charged particle microscopy data structure to be generated using the data for the plurality of images, and one or more features of the sample to be identified based on the HDR charged particle microscopy data structure. In some embodiments, the systems herein may further include an EDS system configured to perform EDS analysis on material depositions of the sample. The instructions may further cause the EDS system to analyze one or more material depositions of the sample based on the identified one or more features.

### BRIEF DESCRIPTION OF THE DRAWINGS

The detailed description is described with reference to the accompanying figures. In the figures, the left-most digit(s) of a reference number identify the figure in which the reference number first appears. The same reference numbers in different figures indicates similar or identical items.
Figure 1 illustrates example systems for performing HDR charged particle analysis using clustering processes.
Figure 2 schematically depicts a computing architecture for performing HDR charged particle sample analysis using clustering processes.
Figure 3 is a flow diagram of an illustrative process for performing HDR charged particle sample analysis.
Figure 4 depicts a sample process for automatically generating a labeled microscope image.
Figure 5 illustrates a plurality of instances of image data 500 for performing HDR charged particle sample analysis.
Figure 6 shows example images generated from instances of image data having been acquired with different charged particle microscope parameters.
Figures 7-10 show collections of examples of the improved performance of automated segmentation algorithms when used with methods and systems of the present disclosure in comparison to the current art.
Figure 11 visually depicts a sample process for conducting EDS analysis of a sample using a plurality of instances of image data having been acquired with different charged particle microscope parameters according to the present disclosure.

Like reference numerals refer to corresponding parts throughout the several views of the drawings.

### DETAILED DESCRIPTION OF EMBODIMENTS

Methods and systems for high dynamic range (HDR) charged particle analysis using clustering processes are disclosed. More specifically, the disclosure includes methods and systems for using a plurality of images and/or instances of image data to generate an HDR charged particle microscopy data structure. The methods and systems are then able to determine one or more features of the sample based on the HDR charged particle microscopy data structure. The plurality of images and/or instances of image data may be acquired by a charged particle microscope system in parallel, in sequence, or a combination thereof. Each image/instance was acquired by a charged particle microscope system with a different set of charged particle microscope parameters. In various embodiments, the difference in parameters between individual images/instances of image data may include one or more of a difference in contrast, brightness, beam strength, beam type, gamma, and/or a combination thereof. One or both of generating the HDR charged particle microscopy data structure and/or identifying the one or more features comprises applying a clustering algorithm to one or both of the plurality images/instances of image data and the HDR charged particle microscopy data structure. By generating and analyzing an HDR charged particle microscopy data structure in this way, methods and systems according to the present disclosure are able to identify even subtle transitions between different elements/molecules in the sample without needing to preconfigure the charged particle microscope system and/or know the composition of the sample prior to imaging. That is, the methods and systems described herein are able to generate images that differentiate between different materials and/or features on a sample, without requiring any knowledge of the sample's composition.

In some embodiments of the present disclosure, the one or more features determined using the HDR charged particle microscopy data structure are then used to conduct EDS analysis on the sample. For example, the one or more identified features may correspond to transitions between material deposits in the region of the sample depicted by the captured images. Such transitions may be used to segment an image of the sample such that individual segments of the image correspond to individual material deposits. The systems and features may then identify locations within one or more of the segmented regions to perform EDS analysis on and label the entire segmented region with the chemical composition identified via the EDS analysis. In this way, instead of needing to perform EDS on each pixel region of the images, systems and methods according to the present disclosure allow for the determination of an optimal pattern of EDS irradiation locations (i.e., one pixel location within each segmented region), greatly reducing the time to data for EDS analysis of samples.

Generally, in the figures, elements that are likely to be included in a given example are illustrated in solid lines, while elements that are optional to a given example are illustrated in broken lines. However, elements that are illustrated in solid lines are not essential to all examples of the present disclosure, and an element shown in solid lines may be omitted from a particular example without departing from the scope of the present disclosure.

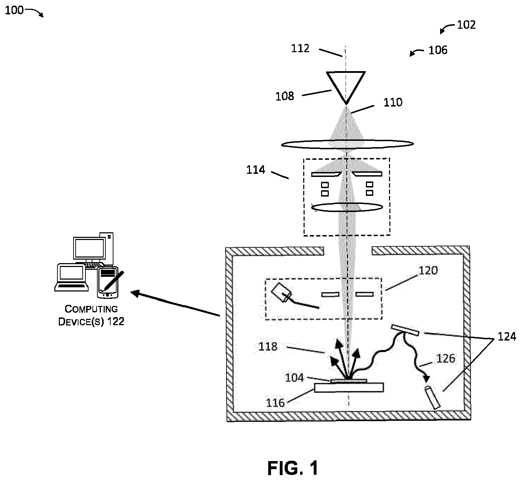

FIG. 1 illustrates example systems 100 for performing HDR charged particle analysis using clustering processes. FIG. 1 illustrates example systems 100 as optionally including a charged particle microscope system 102 for generating a plurality of images of a sample 104. According to the present invention, each of the plurality of images are acquired with different charged particle microscope parameters. For example, individual images may be acquired with different contrasts, brightness levels, beam strengths, beam types, gammas, and/or a combination thereof. The example charged particle microscope system 100 may be or include one or more different types of EM and/or charged particle microscopes, such as, but not limited to, a scanning electron microscope (SEM), a scanning transmission electron microscope (STEM), a transmission electron microscope (TEM), a charged particle microscope (CPM), dual beam microscopy system, etc. FIG. 1 shows the charged particle microscope system 100 as being a SEM system 106. However, a person having skill in the art would understand from FIG. 1 how the methods and system of the present disclosure would be embodied with other types of EM and/or charged particle microscopes.

The STEM system 106 includes an electron source 108 that emits electron beam 110 along an emission axis 112, towards a focusing column 114. In some embodiments, the focusing column 114 may include one or more of a condenser lens, aperture, scan coils, upper objective lens, etc. The focusing column 114 focuses electrons from electron source 108 into a small spot on sample 104. Different locations of the sample may be scanned by adjusting the electron beam 110 direction via the scan coils. For example, by operating scan coils, electron beam 110 may be shifted such that it is incident upon different locations of sample 104.

The sample 104 may be held by a sample holder 116. Emissions 118 emitted by the sample 104 as a result of irradiation of the sample by the charged particle beam 110 are detected by a detector system 120. For example, emissions 118 may correspond to secondary backscatter electrons emitted by individual elements/molecules in response to absorbing electrons from the charged particle beam 110. The detector system 120 is configured to generate image data based on a portion of the emissions 118 that it detects, where the image data can be used to generate images of the sample 104 that was irradiated by the charged particle beam 110. As noted above, individual instances of the image data are acquired with different charged particle microscope parameters. Such instances of image data may be acquired in series, in parallel, or a combination thereof. For example, in one embodiment the charged particle microscope 102 may generate a first instance of image data by irradiating a region of the sample 104, one or more parameters of the charged particle microscope 102 are changed, and then a second instance of image data by irradiating a region of the sample 104. Alternatively, the detector system 120 may be configured to simultaneously capture multiple instances of image data having different charged particle microscope parameters based on a single irradiation of the region of the sample 104. For example, may include a first detector and a second detector, where each of the first detector and the second detector are different configurations, positions, orientations, filters, detector types, or a combination thereof such that the image data they each generate have different parameters. Alternatively or in addition, a single detector of the detector system 120 may be composed of different detector regions, where each individual detector region is configured to configured with different parameters. For example, a first surface of a detector may have a filter that generates image data having a first contrast level, while a second surface of the same detector may have a different filter that causes the image data the second surface generates to have a second contrast level.

FIG. 1 further shows the charged particle microscope setup(s) 100 as including computing device(s) 122 executable to generate an HDR charged particle data structure based on the plurality of instances of image data generated by the detector system 120, and determine one or more features of the sample based on the HDR charged particle data structure. The computing device(s) 122 may include a computing device that is a component of the charged particle microscope setup(s) 100, may be in communication with the charged particle microscope setup(s) 100 via a network communication interface, or a combination thereof. For example, charged particle microscope setup 100 may include a computing device that is a component portion of the charged particle microscope setup 100, and which acts as a controller that drives the operation of the charged particle microscope setup 100 (e.g., adjust the scanning location on the sample 104 by operating the scan coils, adjust the profile of the incident beam 110 by adjusting one or more apertures and/or lens, adjust the sample orientation relative to the incident beam 110 by adjusting the sample holder 116, etc.). Alternatively or in addition, the computing device(s) 122 may include a computing device that is separate from the charged particle microscope setup 100, and configured to receive the plurality of image data generated by a detector system 120 via an electronic data transfer (e.g., wireless data transfer, network data transfer, etc.) or a hardware data transfer (e.g., CD-ROM, thumb drive, etc.).

The computing device(s) 122 are executable to generate an HDR charged particle data structure based on the plurality of instances of image data generated by the detector system 120. That is, based on a plurality of instances of image data from charged particle imaging of a sample 104 that were each captured with different charged particle microscope parameters, computing device 122 is configured to generate an HDR charged particle data structure.

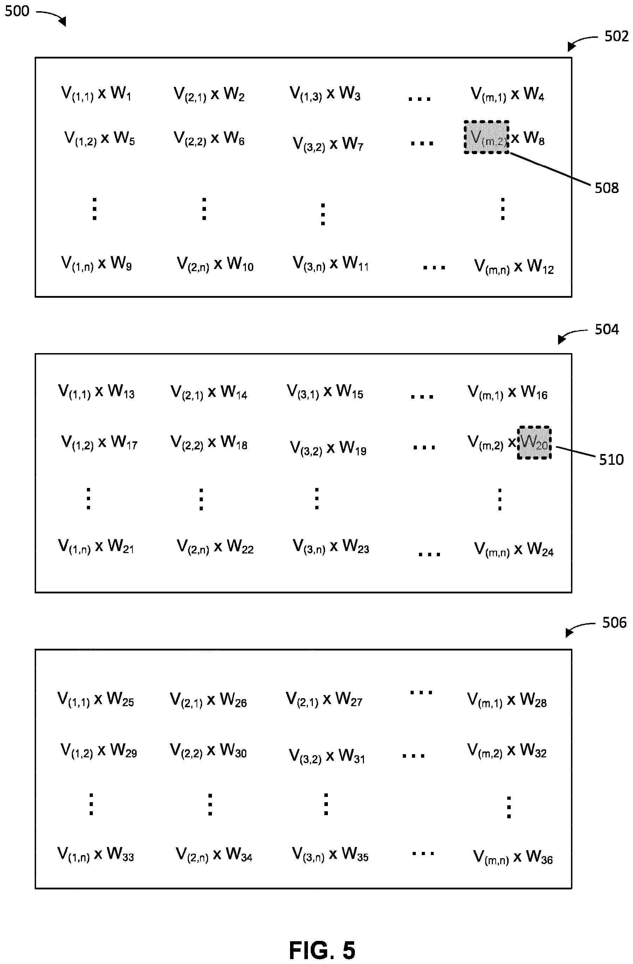

In some embodiments, the HDR charged particle data structure corresponds to an HDR charged particle image or other type of data formation (e.g., table) that stores a single pixel value for individual pixel locations on the sample that is generated based on the plurality of instances of image data. In such embodiments, the HDR charged particle image or data formation may be generated by applying a HDR algorithm to the plurality of instances of image data. In various embodiments, the HDR algorithm applies weights to individual pixel values of the instances of image data based on the importance of the pixel information. For example, a pixel having a washed out value (i.e., near 1 or 0 in a greyscale image) may be assigned a low weight as it does not convey much information about the sample 104. Alternatively or in addition, weights for an pixel value for a particular pixel location may also be determined based on the pixel values associated with pixels located proximate to the pixel location. For example, a pixel may be assigned a higher weight due to a first set of multiple proximate pixels having a very similar value and a second set of multiple proximate pixels having a very different value, this indicating that the pixel value may be indicative of a feature of material transition in the sample 104. In another example, a pixel value may be assigned a lower value based on the proximate pixels having consistently different value, as this is likely indicative of the pixel value being noise. An example of such a weighted image data is shown in FIG. 5. The HDR algorithm may determine pixel values for individual pixel locations of the HDR charged particle images based on one or more pixel values associated with the individual pixel location of some or all of the instances of image data, as well as any weights assigned thereto (e.g., a weighted average). For example, the HDR algorithm may only consider a subset of pixel values with individual pixel locations across the plurality of instances of image data associated, such as a set of pixel values with a weight at or above a threshold value, a preset number of values having the highest associated weight, or a combination thereof.

Where the plurality of image data is converted to a plurality of images of the sample 104 before conversions and/or generation of the HDR charged particle image, assigning the weights to the pixel values may correspond to generating a mask for each image that identifies portions of the corresponding image that contain important information about the sample. The mask may also assign a weight to one or more pixel locations in the corresponding image. In such embodiments, the HDR charged particle image may be generated based on the masks and/or the regions of each image that are indicated has corresponding to valuable sample information. The computing device 122 may then determine one or more features of the sample (e.g., geometric features, material transitions, etc.) based on the HDR charged particle image.

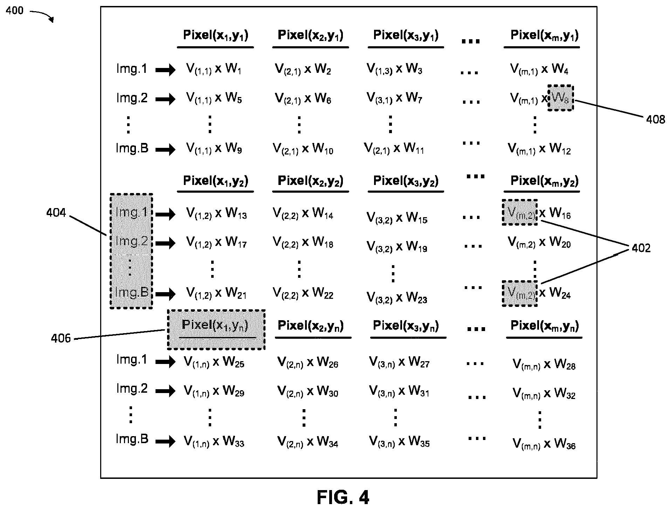

Alternatively, the HDR charged particle data structure may correspond to a multi-dimensional data structure that stores data values from some or all of the instances of image data of the sample 104 in parallel. For example, for each pixel location the HDR charged particle data structure may store the corresponding value for the pixel location from each of the instances of image data in association with each other. An example of such an HDR charged particle data structure is shown in FIG. 4. Generating the multi-dimensional data structure comprises assigning weights to individual pixel values therein based on the importance of the corresponding pixel information.

The computing device 122 may then determine one or more features of the sample (e.g., geometric features, material transitions, etc.) by applying a segmentation algorithm (e.g., clustering algorithm, watershed algorithm, etc.) to the multidimensional data structure. For example, the segmentation algorithm may determine HDR pixel values for an HDR charged particle image based at least in part the corresponding values in the multidimensional data structure associated with the corresponding individual pixel locations, additional values associated with additional pixel locations surrounding the corresponding individual pixel locations, weights assigned thereto, or a combination thereof. In some embodiments, the segmentation algorithm may only consider a subset of pixel values associated with individual pixel locations across the plurality of instances of image data associated, such as a set of pixel values with a weight at or above a threshold value, a preset number of values having the highest associated weight, or a combination thereof.

In some embodiments, the computing devices 122 may be further configured to segment an HDR charged particle image based on the determined one or more features. For example, based on a plurality of determined material transitions the computing devices 122 may generate a segmented HDR charged particle image, where individual segments thereof correspond to separate material deposits within the sample. This may also involve one or more smoothing algorithms that remove noise from the HDR charged particle image by removing outlier values. In this way, noise artifacts in the HDR charged particle image are removed resulting in a more accurate representation of the array of material deposits present in the sample.

Charged particle microscope setup(s) 100 is also shown in FIG. 1 as optionally including an Energy Dispersive X-Ray Spectroscopy (EDS or EDX) system 124 that is configured to perform EDS processing of the sample 104. During EDS processing in response to a point on the sample 104 being irradiated, elements/molecules located at the irradiated point emit spectroscopic emissions 126 (e.g., x-rays) which are detected by an EDS detector 128. Based on the EDS data generated by the EDS detector, the computing device(s) 122 are able to determine the characteristic emission pattern of the detected spectroscopic emissions 126. The computing device(s) 122 are then able to determine the chemical composition of the elements/molecules located at the irradiated point based on the determined characteristic emission pattern.

While FIG. 1 illustrates the charged particle microscope setup(s) 100 as including a single beam (i.e., the charged particle beam 110) from a single source (i.e., the charged particle source 108) that is configured to perform the irradiation in both the imaging process and the EDS process, in other embodiments the charged particle microscope setup(s) 100 may have more than one beam source such that a first beam is used for irradiation in the charged particle image processing of the sample 104 and a second beam is used for EDS processing of the sample 104. For example, the charged particle microscope setup(s) 100 may include an electron beam source that generates an electron beam that is used to perform electron microscope imaging of the sample 104 and an x-ray source that is used to irradiate a point of the sample with x-rays during EDS processing of the sample 104.

In some embodiments, the charged particle microscope setup 100 is further configured to preform and/or cause an EDS system to perform an EDS analysis of the sample 104. Specifically, the charged particle microscope setup(s) 100 may be configured to use the one or more features determined by the computing devices 122 to determine an optimized pattern of irradiation locations for the EDS analysis of the sample 104. For example, based on a segmented HDR charged particle image the computing devices 122 can identify a location within each segmented region that is to be irradiated during EDS processing of the sample. Thus, instead of needing to perform EDS analysis of each location on the sample, the computing devices 122 can use the one or more features to identifying regions of the sample 104 that correspond to individual material deposits, and cause the EDS system 124 to only perform a single irradiation/EDS measurement for each region. For example, the computing devices 122 can use a segmented HDR charged particle image to identify regions of the sample that correspond to individual material deposits. Then, either automatically or responsive to a user input the computing devices 122 can cause the EDS system to analyze a single point within one or more portions of the sample corresponding to individual segmented regions. The computing devices 122 can use the results from the EDS analysis to label the entire portion of the sample 104 and/or HDR charged particle image corresponding to the particular segmented region with the chemical composition identified via the analysis. For example, the computing devices 122 may present a graphical user interface (GUI) that allows the user to select one or more segmented regions of the sample that the EDS system is to perform EDS analysis, and responsive to the selection of an individual segmented region the computing devices 122 can determine a position within the individual segmented region that is to be irradiated during the EDS analysis. Alternatively or in addition, the computing devices 122 may select a subset of segmented regions of the sample based on a preset number of segmented regions and/or the characteristics of individual segmented regions (e.g., a size of individual segmented regions, a shape of individual segmented regions, etc.).

According to the present invention, the position within an individual segmented region that is to be irradiated may be determined based on an algorithm that finds the location within the segmented region that is furthest from a boundary of the segmented region. For example, such an algorithm may be applied to a smoothed version of the segmented HDR charged particle image to identify points within one or more of the segmented regions that are furthest from their respective boundaries. Alternatively or in addition, some or all of the noise removed from the smoothed version of the segmented HDR charged particle image may be reintroduced before the algorithm is applied such that the location determined by the algorithm does not overlap and/or is not proximate to a noise artifact. In this way, the computing devices 122 is able to prevent the EDS irradiation from occurring at a position on the sample where there is a small defect, impurity, or geographic anomaly (e.g., crack, micro-deposit, etc.). Thus, systems and methods according to the present disclosure are able to drastically reduce the time to data for EDS analysis of samples with unknown material composition. Additionally, the systems and methods according to the present disclosure further allow for automation of some or all of the processes for performing EDS analysis, and especially for the processes for performing EDS analysis on samples having unknown material composition.

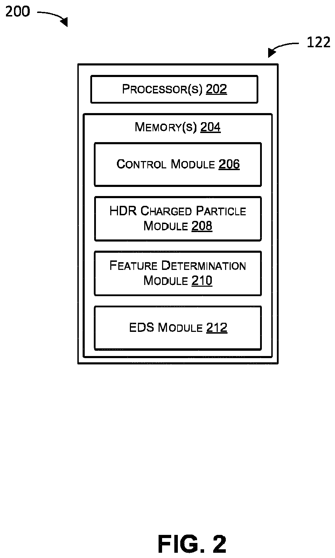

FIG. 2 depicts a schematic diagram illustrating computing architecture 300 of an example computing device 122 executable to at least partially perform HDR charged particle sample analysis using clustering processes. For instance, FIG. 2 illustrates additional details of hardware and software components that can be used to implement the techniques described in the present disclosure. In the example computing architecture 200, the computing device 122 includes one or more processors 202 and memory 204 communicatively coupled to the one or more processors 202.

The example computing architecture 200 can include control module 206, an HDR charged particle module 208, a feature determination module 210, and an EDS module 212 stored in the memory 204. As used herein, the term "module" is intended to represent example divisions of executable instructions for purposes of discussion, and is not intended to represent any type of requirement or required method, manner or organization. Accordingly, while various "modules" are described, their functionality and/or similar functionality could be arranged differently (e.g., combined into a fewer number of modules, broken into a larger number of modules, etc.). Further, while certain functions and modules are described herein as being implemented by software and/or firmware executable on a processor, in other instances, any or all of modules can be implemented in whole or in part by hardware (e.g., a specialized processing unit, etc.) to execute the described functions. In various implementations, the modules described herein in association with the example computing architecture 200 can be executed across multiple devices.

The control module 206 can be executable by the processors 202 to act as a controller that drives the operation of an example charged particle microscope setup, such as the example charged particle microscope setup(s) 100. For example, the control module 206 may operate scan coils to adjust the scanning location of a charged particle beam on a sample, adjust one or more apertures and/or lenses to adjust the profile of the incident beam, and/or adjust a sample holder to adjust the sample orientation relative to the incident beam. For example, the control module 206 may be executable to cause a charged particle microscope setup to obtain a plurality of instances of image data for a region of a sample, where individual instances of image data are acquired with different charged particle microscope parameters. As discussed above, the control module 206 may cause such instances of image data may be acquired in series, in parallel, or a combination thereof. For example, a first instance of image data may be generated via a first irradiation of a region of the sample, and then a second instance of image data may be generated by a second irradiation of the region of the sample, where one or more parameters of the charged particle microscope are changed between the first and second irradiation of the sample. Alternatively, where the charged particle microscope system contains a detector system configured to simultaneously capture multiple instances of image data having different charged particle microscope parameters (e.g., different detectors with different parameters, different regions of a detector with different parameters, etc.), the control module 206 may cause one or more of the instances of image data having different parameters to be captured based on a single irradiation of the region of the sample.

The HDR charged particle module 208 can be executable by the processors 202 to generate an HDR charged particle data structure based on the plurality of instances of image data having different charged particle microscope parameters. In some embodiments, the HDR charged particle module 208 is executable to generate an HDR charged particle image or other type of data formation that stores a single pixel value for individual pixel locations of the sample based on the plurality of instances of image data. In such embodiments, the HDR charged particle module 208 may generate the HDR charged particle image by applying a HDR algorithm to the plurality of instances of image data that is configured to partition related pixel values corresponding to particular regions of the sample across the plurality of instances of image data. In some embodiments, the HDR algorithm further applies weights to individual pixel values of the instances of image data based on the importance of the pixel information. For example, a pixel having a washed out value (i.e., near 1 or 0 in a greyscale image) may be assigned a low weight as it does not convey much information about the sample. Alternatively or in addition, weights for a pixel value for a particular pixel location may be determined based on the pixel values associated with pixels located proximate to the pixel location. For example, a pixel may be assigned a higher weight due to a first set of multiple proximate pixels having a very similar value and a second set of multiple proximate pixels having a very different value, this indicating that the pixel value may be indicative of a feature of material transition in the sample. In another example, a pixel value may be assigned a lower value based on the proximate pixels having consistently different value, as this is likely indicative of the pixel value being noise.

The HDR charged particle module 208 may be executable to determine pixel values for individual pixel locations of the HDR charged particle images based on one or more pixel values associated with the individual pixel location of some or all of the instances of image data, as well as any weights assigned thereto (e.g., a weighted average). For example, the HDR algorithm may only consider a subset of pixel values with individual pixel locations across the plurality of instances of image data associated, such as a set of pixel values with a weight at or above a threshold value, a preset number of values having the highest associated weight, or a combination thereof. Where the plurality of image data is converted to a plurality of images of the sample before conversions and/or generation of the HDR charged particle image, assigning the weights to the pixel values may correspond to generating a mask for each image that identifies portions of the corresponding image that contain important information about the sample. The mask may also assign a weight to one or more pixel locations in the corresponding image. In such embodiments, the HDR charged particle image may be generated based on the masks and/or the regions of each image that are indicated has corresponding to valuable sample information.

In an alternate embodiment, the HDR charged particle module 208 is executable to generate a multi-dimensional data structure that stores data values from some or all of the instances of image data of the sample 104 in parallel. For example, for each pixel location the HDR charged particle data structure may store the corresponding value for the pixel location from each of the instances of image data in association with each other. The HDR charged particle module 208 may also be configured to assign weights to individual pixel values within the multi-dimensional data structure comprises assigning based on the importance of the corresponding pixel information.

The feature determination module 210 can be executable by the processors 202 to determine one or more features of the sample based on the HDR charged particle data structure. The one or more features may correspond to geometric features of the sample (e.g., deposits, textures, crystal shapes, cracks, voids, etc.) or material features of the sample (e.g., transitions between material deposits, etc.).

In some embodiments, the feature determination module 210 may determine the one or more features of the sample by applying a segmentation algorithm (e.g., clustering algorithm, watershed algorithm, etc.) to the HDR charged particle data structure (e.g., HDR charged particle image, multidimensional data structure, etc.). For example, the feature determination module 210 may apply a segmentation algorithm that partitions pixel values relating to individual regions of the sample, and then identify patterns among the partitioned or otherwise interrelated pixel values that are indicative of material transitions in the sample. In some embodiments, determining the one or more features may include the feature determination module 210 determining HDR pixel values for an HDR charged particle image based at least in part the corresponding values in the multidimensional data structure associated with the corresponding individual pixel locations, additional values associated with additional pixel locations surrounding the corresponding individual pixel locations, weights assigned thereto, or a combination thereof. In some embodiments, the segmentation algorithm may only consider a subset of pixel values associated with individual pixel locations across the plurality of instances of image data associated, such as a set of pixel values with a weight at or above a threshold value, a preset number of values having the highest associated weight, or a combination thereof.

In some embodiments, the feature determination module 210 may be further configured to segment an HDR charged particle image based on the determined one or more features. For example, based on a plurality of determined material transitions the feature determination module 210 may generate a segmented HDR charged particle image, where individual segments thereof correspond to separate material deposits within the sample. This may also involve one or more smoothing algorithms that remove noise from the HDR charged particle image by removing outlier values. In this way, noise artifacts in the HDR charged particle image are removed resulting in a more accurate representation of the array of material deposits present in the sample.

The EDS module 212 can be executable by the processors 302 to cause an EDS system to perform an EDS analysis of the sample based on the one or more features determined by the feature determination module 210. Specifically, the EDS module 212 may be configured to use the one or more features to determine an optimized pattern of irradiation locations for the EDS analysis of the sample. For example, based on a segmented HDR charged particle image the EDS module 212 can identify locations within one or more segmented regions that are to be irradiated during EDS processing of the sample. Thus, instead of needing to perform EDS analysis of each location on the sample, an EDS system (such as an EDS system within a charged particle microscope system as shown in FIG. 1) can use the identified locations so that it only perform a single irradiation/EDS measurement for each region.

In some embodiments, the EDS module 212 can use a segmented HDR charged particle image to identify regions of the sample that correspond to individual material deposits. Then, either automatically or responsive to a user input the control module 206 can cause the EDS system to analyze a single point within one or more portions of the sample corresponding to individual segmented regions. The EDS module 212 can then use the results from the EDS analysis to label the entire portion of the sample and/or HDR charged particle image corresponding to the particular segmented region with the chemical composition identified via the analysis. The EDS module 212 may present a graphical user interface (GUI) that allows the user to select one or more segmented regions of the sample that the EDS system is to perform EDS analysis, and responsive to the selection of an individual segmented region the EDS module 212 can determine a position within the individual segmented region that is to be irradiated during the EDS analysis. Alternatively or in addition, the EDS module 212 may select a subset of segmented regions of the sample based on a preset number of segmented regions and/or the characteristics of individual segmented regions (e.g., a size of individual segmented regions, a shape of individual segmented regions, etc.).

In an example embodiment, the EDS module 212 may identify the position within an individual segmented region that is to be irradiated based on an algorithm that finds the location within the segmented region that is furthest from a boundary of the segmented region. For example, such an algorithm may be applied to a smoothed version of the segmented HDR charged particle image to identify points within one or more of the segmented regions that are furthest from their respective boundaries. Alternatively or in addition, some or all of the noise removed from the smoothed version of the segmented HDR charged particle image may be reintroduced before the algorithm is applied such that the location determined by the algorithm does not overlap and/or is not proximate to a noise artifact. In this way, the EDS module 212 is able to prevent the EDS irradiation from occurring at a position on the sample where there is a small defect, impurity, or geographic anomaly (e.g., crack, micro-deposit, etc.).

Those skilled in the art will appreciate that the computing architecture 200 is merely illustrative and is not intended to limit the scope of the present disclosure. In particular, the computing system and devices may include any combination of hardware or software that can perform the indicated functions, including computers, network devices, internet appliances, PDAs, wireless phones, controllers, oscilloscopes, amplifiers, etc. The computing architecture 200 may also be connected to other devices that are not illustrated, or instead may operate as a stand-alone system. In addition, the functionality provided by the illustrated components may in some implementations be combined in fewer components or distributed in additional components. Similarly, in some implementations, the functionality of some of the illustrated components may not be provided and/or other additional functionality may be available.

The one or more processors 202 may be configured to execute instructions, applications, or programs stored in the memories 204. In some examples, the one or more processors 202 may include hardware processors that include, without limitation, a hardware central processing unit (CPU), a graphics processing unit (GPU), and so on. While in many instances the techniques are described herein as being performed by the one or more processors 202, in some instances the techniques may be implemented by one or more hardware logic components, such as a field programmable gate array (FPGA), a complex programmable logic device (CPLD), an application specific integrated circuit (ASIC), a system-on-chip (SoC), or a combination thereof.

The memories 204 are examples of computer-readable media. Computer-readable media may include two types of computer-readable media, namely computer storage media and communication media. Computer storage media may include volatile and non-volatile, removable, and non-removable media implemented in any method or technology for storage of information, such as computer readable instructions, data structures, program modules, or other data Computer storage media includes, but is not limited to, random access memory (RAM), read-only memory (ROM), erasable programmable read only memory (EEPROM), flash memory or other memory technology, compact disc read-only memory (CD-ROM), digital versatile disk (DVD), or other optical storage, magnetic cassettes, magnetic tape, magnetic disk storage or other magnetic storage devices, or any other non-transmission medium that may be used to store the desired information and which may be accessed by a computing device. In general, computer storage media may include computer• executable instructions that, when executed by one or more processing units, cause various functions and/or operations described herein to be performed. In contrast, communication media embodies computer-readable instructions, data structures, program modules, or other data in a modulated data signal, such as a carrier wave, or other transmission mechanism. As defined herein, computer storage media does not include communication media.

Those skilled in the art will also appreciate that, while various items are illustrated as being stored in memory or storage while being used, these items or portions of them may be transferred between memory and other storage devices for purposes of memory management and data integrity. Alternatively, in other implementations, some or all of the software components may execute in memory on another device and communicate with the illustrated computing architecture 200. Some or all of the system components or data structures may also be stored (e.g., as instructions or structured data) on a non-transitory, computer accessible medium or a portable article to be read by an appropriate drive, various examples of which are described above. In some implementations, instructions stored on a computer-accessible medium separate from the computing architecture 200 may be transmitted to the computing architecture 200 via transmission media or signals such as electrical, electromagnetic, or digital signals, conveyed via a communication medium such as a wireless link. Various implementations may further include receiving, sending or storing instructions and/or data implemented in accordance with the foregoing description upon a computer-accessible medium.

The architectures, systems, and individual elements described herein may include many other logical, programmatic, and physical components, of which those shown in the accompanying figures are merely examples that are related to the discussion herein.

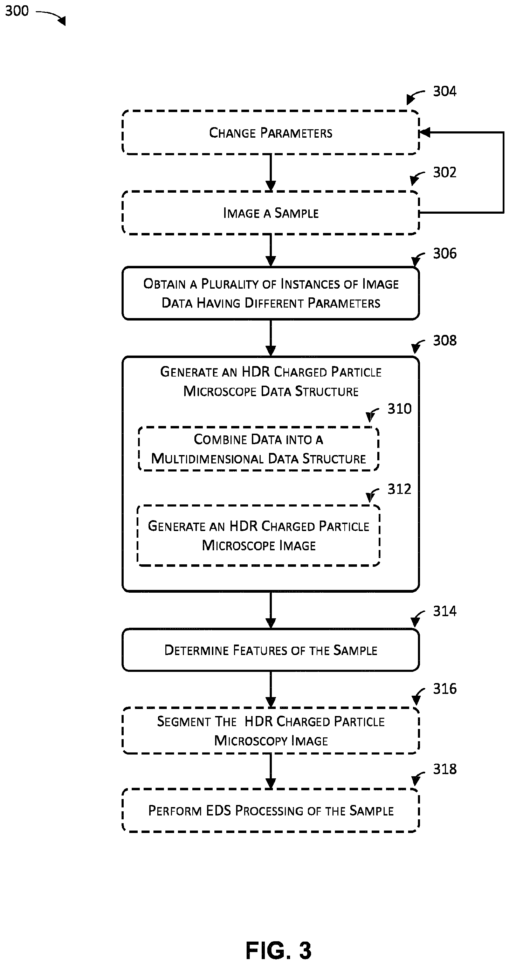

FIG. 3 is a flow diagram of an illustrative process shown as a collection of blocks in a logical flow graph, which represent a sequence of operations that can be implemented in hardware, software, or a combination thereof. In the context of software, the blocks represent computer-executable instructions stored on one or more computer-readable storage media that, when executed by one or more processors, perform the recited operations. Generally, computer-executable instructions include routines, programs, objects, components, data structures, and the like that perform particular functions or implement particular abstract data types. The order in which the operations are described is not intended to be construed as a limitation, and any number of the described blocks can be combined in any order and/or in parallel to implement the processes.

Specifically, FIG. 3 is a flow diagram of an illustrative process 300 for performing HDR charged particle sample analysis. The process 300 may be implemented in example charged particle microscope setup(s) 100 and/or by the computing architecture 200 described above, or in other environments and architectures.

At 302, a sample is optionally imaged with a charged particle microscope system. For example, where the charged particle microscope system is a scanning electron microscope, imaging the sample includes scanning an electron beam over a region of a surface of the sample and detecting emissions released by the sample responsive to the scanning. One or more detectors within the charged particle microscope system detect emissions and generate instances of image data for the region of the sample, The instances of image data can be used by a computing system to generate images of the region of the sample. The characteristics of the instances of image data are determined by one or more associated parameters, such as contrast, brightness, beam strength, beam type, gamma, and/or a combination thereof. For example, based on the contrast settings associated with an instance of image data a first material transition within the sample may be highly defined, while a second material transition within the sample may be indistinguishable from the instance of image data. In some embodiments, more than one instance of image data having different parameters may be obtained simultaneously during the imaging of the sample. For example, the charged particle microscope system may have more than one detector and/or regions within individual detectors that obtain separate instances of image data with different parameters based on respective detected emissions. For example, a first detector and a second detector may have different filters applied thereto, such that the contrast for image data from the first detector cause different material transitions and/or other sample features to be visible than can be determined from the second image data.

At 304, one or more parameters of the charged particle microscope system are optionally changed. This can include adjusting the contrast, brightness, beam strength, beam type, gamma, and/or a combination thereof. The process then continues to step 302, where at least a new instance of image data is optionally obtained with the new charge particle microscope system parameters.

At 306, a plurality of instances of image data are obtained, where each instance of image data has different associated charged particle microscope parameters. In various embodiments according to the present disclosure, obtaining the instance of image data by be performed over a hardwire or wireless connection with one or more detectors in a charged particle microscope system. Alternatively, the obtaining of instance of image data may correspond to accessing the instance of image data via a data transfer over a network (e.g., LAN, WAN, internet, Wireless, Bluetooth, etc.) or a hardware medium (e.g., CD-ROM, USB drive, etc.).

At 308, an HDR data charged particle microscope data structure is generated based on the plurality of instances of image data having different charged particle microscope parameters. In some embodiments, generating the HDR charged particle microscope data structure comprises optionally combining the instances of image data into a multidimensional data structure at step 310. Such a multidimensional data structure may store data values from some or all of the instances of image data of the sample in parallel. For example, for each pixel location the HDR charged particle data structure may store the corresponding value for the pixel location from each of the instances of image data in association with each other. In some embodiments, generating the multidimensional data structure further includes assigning weights to individual pixel values within the multi-dimensional data structure based on the importance of the corresponding pixel information.

Generating the HDR charged particle microscope data structure may also optionally comprise generating an HDR charged particle microscope image at step 312. The generation of such an HDR charged particle microscope image may be based on the plurality of instances of image data, the multidimensional data structure, or a combination thereof. For example, the HDR charged particle image may be generated by applying a HDR algorithm to the plurality of instances of image data, where the HDR algorithm is configured to partition related pixel values corresponding to particular regions of the sample across the plurality of instances of image data. Once interrelated pixel values are identified they can be used to identify corresponding HDR pixel values in the HDR charged particle microscope image.

In some embodiments, the HDR algorithm further applies and/or considers weights for individual pixel values of the instances of image data. The weight assigned to a pixel value corresponds to the importance of the pixel information. For example, a pixel having a washed out value (i.e., near 1 or 0 in a greyscale image) may be assigned a low weight as it does not convey much information about the sample. In some embodiments, the weight for a pixel value for a particular pixel location may be determined based on the pixel values associated with pixels located proximate to the pixel location. For example, a pixel may be assigned a higher weight due to a first set of multiple proximate pixels having a very similar value and a second set of multiple proximate pixels having a very different value, this indicating that the pixel value may be indicative of a feature of material transition in the sample. In another example, a pixel value may be assigned a lower value based on the proximate pixels having consistently different value, as this is likely indicative of the pixel value being noise.

In some embodiments, the pixel values for individual pixel locations of the HDR charged particle images may be determined based on one or more pixel values associated with the individual pixel location of some or all of the instances of image data, as well as any weights assigned thereto (e.g., a weighted average). For example, the HDR algorithm may only consider a subset of pixel values with individual pixel locations across the plurality of instances of image data associated, such as a set of pixel values with a weight at or above a threshold value, a preset number of values having the highest associated weight, or a combination thereof.

Where the plurality of image data is converted to a plurality of images of the sample before conversions and/or generation of the HDR charged particle image, assigning the weights to the pixel values may correspond to generating a mask for each image that identifies portions of the corresponding image that contain important information about the sample. The mask may also assign a weight to one or more pixel locations in the corresponding image. In such embodiments, the HDR charged particle image may be generated based on the masks and/or the regions of each image that are indicated has corresponding to valuable sample information.

At 314, one or more features of the sample are determined. Specifically, the one or more features of the sample are determined based on the HDR charged particle microscope image. The one or more features may correspond to geometric features of the sample (e.g., deposits, textures, crystal shapes, cracks, voids, etc.) or material features of the sample (e.g., transitions between material deposits, etc.). In some embodiments, the one or more features of the sample are determined at least in part by applying a segmentation algorithm (e.g., clustering algorithm, watershed algorithm, etc.) to the HDR charged particle data structure (e.g., HDR charged particle image, multidimensional data structure, etc.). For example, a segmentation algorithm may be applied that partitions pixel values of an HDR charged particle microscope image and/or a multidimensional data structure relating to individual regions of the sample, and then identify patterns among the partitioned or otherwise interrelated pixel values that are indicative of material transitions in the sample.

At 316, a segmented HDR charged particle microscope image is optionally created based on the one or more features of the sample determined in step 314. For example, based on a plurality of determined material transitions a segmented HDR charged particle image may be generated where individual segments of the image correspond to separate material deposits within the sample. In some embodiments, generating the segmented image may also involve one or more smoothing algorithms that remove noise from the HDR charged particle image by removing outlier values. In this way, noise artifacts in the HDR charged particle image are removed resulting in a more accurate representation of the array of material deposits present in the sample.

At 318, EDS processing of the sample is optionally performed. Specifically, the one or more features determined in step 314 may be used to cause an EDS system to perform an optimized EDS analysis of the sample. The one or more features may be used to determine an optimized pattern of irradiation locations for the EDS analysis of the sample. For example, based on a segmented HDR charged particle image optionally generated in step 316, locations within one or more of the segmented regions may be identified that are to be irradiated during the EDS processing of the sample. Thus, instead of needing to perform EDS analysis of each location on the sample, an EDS system can use the identified locations so that it only performs a single irradiation/EDS measurement for each region.

FIG. 4 is a diagram that illustrates a multidimensional data structure 400 for performing HDR charged particle sample analysis. FIG. 4 shows a multidimensional data structure 400 where a plurality of pixel values 402 for each of a plurality of instance of image data 404 of a sample are stored in association with their corresponding pixel location 406. Each instance of image data was generated by a charged particle microscope system based on irradiation of a sample, and each of the instances of image data have a different set of associated microscope parameters. In methods and systems according to the present disclosure, a HDR algorithm may be applied to the multidimensional data structure 400 that is configured to determine HDR pixel values for an HDR charged particle image of a sample. Alternatively or in addition, the segmentation algorithm (e.g., clustering algorithm, watershed algorithm, etc.) and/or HDR charged particle image of the sample may be used to determine features of the sample. FIG. 4 further shows the multidimensional data structure 400 as including optional weights 408 assigned to individual pixel values 402.

FIG. 5 is a diagram that illustrates a plurality of instances of image data 500 for performing HDR charged particle sample analysis. Specifically, FIG. 5 shows a first instance of image data 502, a first instance of image data 502, and a first instance of image data 502, where each instance of image data was generated by a charged particle microscope system based on irradiation of a sample. Moreover, each of the instances of image data 502-506 have a different set of associated microscope parameters. FIG. 5 further shows each of the instances of image data 502-506 as including optional weights 510 assigned to individual pixel values 508.

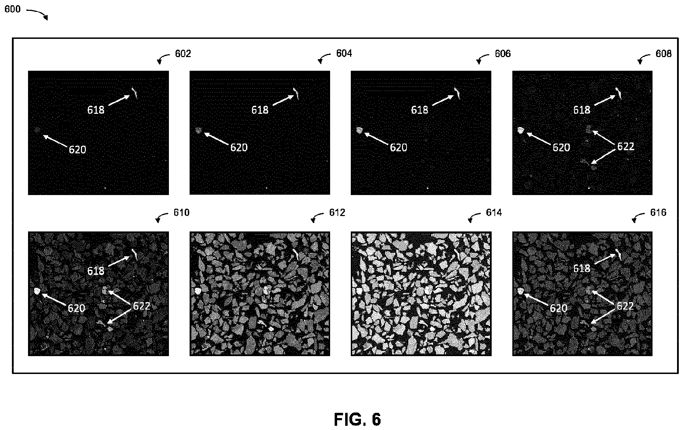

FIG. 6 is a diagram of example images 600 generated from instances of image data having been acquired with different charged particle microscope parameters. Specifically, FIG. 6 shows a collection of eight images 602-818 of a sample that have been acquired with different contrast settings. As can be seen, at different contrast settings the different materials and material transitions in the sample are visible at different levels. For example, in the first figure 602 a first material deposit 618 is clearly visible, while a second material deposit 620 is barely visible, and a third material deposit 622 is not visible at all. That is, in figures 602-606 the contrast settings do not allow information about the third material to be obtained, as the associated pixel values (as well as the pixel values associated with the surrounding region of the sample) have been washed out to black. It is not until figure 608 that the third material deposit 622 first becomes distinguishable from the surrounding region of the sample. As discussed above, if the composition of the sample is known before imaging, the parameters of the charged particle microscope can be adjusted such that specific material deposition/features of interest are visible in the obtained image data. On the contrary, if the composition of the sample is not known before imaging, an operator can expect that at least some of the features and/or deposited materials will not be visible from image data acquired with a single set of parameters. However, using methods and systems according to the present disclosure, operators are able to use a plurality of instances of image data having been acquired with different charged particle microscope parameters to determine features and/or deposited materials of a sample without needing any prior information about the sample composition.

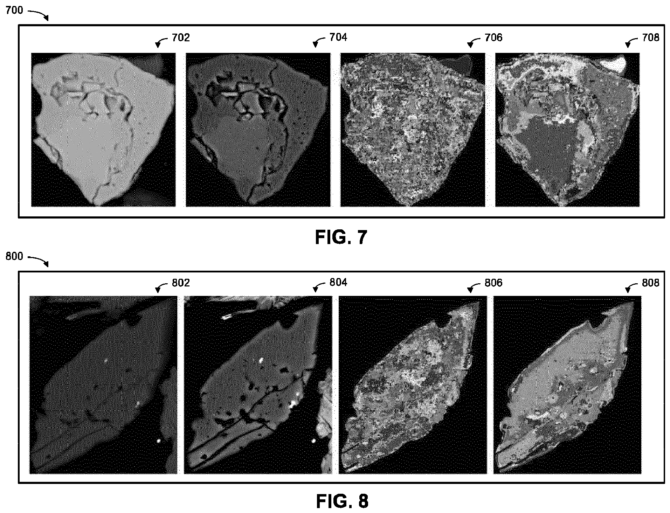

FIGS. 7-10 are collection of examples of the improved performance of automated segmentation algorithms when used with methods and systems of the present disclosure in comparison to the current art. For example, FIG. 7 shows a charged particle microscope image 702 and an HDR charged particle microscope image 704 that has been generated based on a plurality of instances of image data having been acquired with different charged particle microscope parameters. FIG. 7 also shows a first automatically segmented image 706 of the sample that was obtained using image 702 and a second automatically segmented image 708 of the sample that was obtained using image 704.

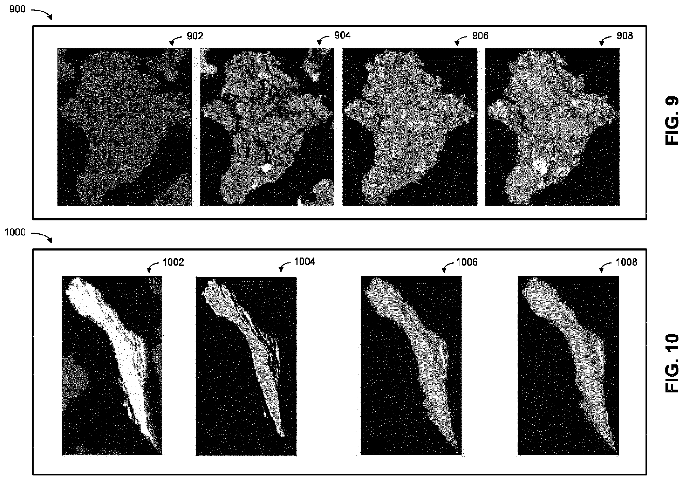

Similarly, FIG. 8 shows a charged particle microscope image 802 and an HDR charged particle microscope image 804 that has been generated based on a plurality of instances of image data having been acquired with different charged particle microscope parameters. FIG. 8 also shows a first automatically segmented image 806 of the sample that was obtained using image 802 and a second automatically segmented image 808 of the sample that was obtained using image 804. FIG. 9 shows a charged particle microscope image 902 and an HDR charged particle microscope image 904 that has been generated based on a plurality of instances of image data having been acquired with different charged particle microscope parameters. FIG. 9 also shows a first automatically segmented image 906 of the sample that was obtained using image 902 and a second automatically segmented image 908 of the sample that was obtained using image 904.

FIG. 10 shows a charged particle microscope image 1002 and an HDR charged particle microscope image 1004 that has been generated based on a plurality of instances of image data having been acquired with different charged particle microscope parameters.

FIG. 10 also shows a first automatically segmented image 1006 of the sample that was obtained using image 1002 and a second automatically segmented image 1008 of the sample that was obtained using image 1004. As can be seen in each of FIGS. 7-10, methods and systems according to the present invention allow for the creation of HDR charged particle data structures that have drastically improved levels of information over techniques in the current art, allowing for algorithms (such as a k-means clustering algorithm) to be applied thereto to more accurately determine features of an imaged sample.

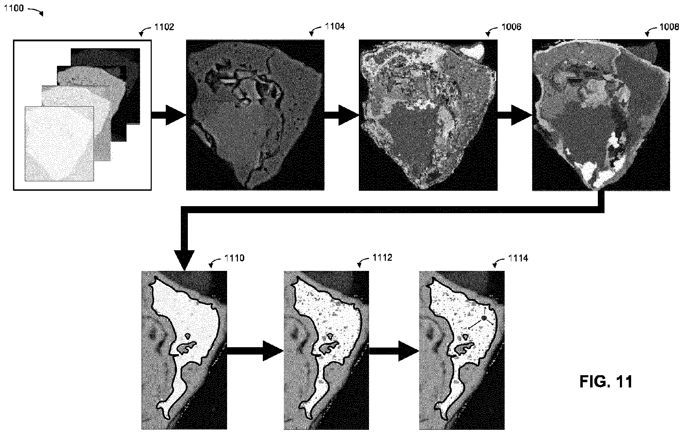

FIG. 11 is a visual flow diagram that illustrates an example process 1100 for conducting EDS analysis of a sample using a plurality of instances of image data having been acquired with different charged particle microscope parameters according to the present disclosure. Specifically, FIG. 11 shows visual outputs of an example method for performing EDS on a sample using a plurality of instances of image data having been acquired with different charged particle microscope parameters.

Image 1102 shows a plurality of instances of image data having been acquired with different charged particle microscope parameters. Image 1104 shows an HDR data structure that is generated based on the acquired plurality of instances of image data. In some embodiments, the HDR data structure is generated based at least in part on applying a HDR algorithm to the plurality of instances of image data, a multidimensional data structure generated using the plurality of instances of image data, one or more images generated from the plurality of instances of image data, or a combination thereof. Image 1104 depicts that HDR data structure as and HDR charged particle image.

Image 1006 shows a segmented HDR charged particle image. In some embodiments, the segmented HDR charged particle image can be generated by applying an algorithm to the HDR charged particle image that determines features of the sample (e.g., material transitions). Image 1008 shows a smoothed segmented HDR charged particle image. The smoothed segmented HDR charged particle image can be generated by applying a smoothing algorithm to the segmented HDR charged particle image that removes noise artifacts.

Image 1110 shows a segmented region of the sample that has been selected for EDS processing. In various embodiments of the disclosure the segmented region may be selected based on a user input (e.g., a user selection via a GUI), automatically by a computing system (e.g., based on size or shape), or a combination thereof (e.g., region having characteristics matching a material profile selected by a user.

Image 1112 shows the segmented region of the sample with at least a portion of the noise artifacts reintroduced. Image 1114 shows an algorithm selecting a location within the segmented region of the sample at which EDS analysis is to occur. In some embodiments, the algorithm finds the location within the segmented region that is furthest from a boundary of the segmented region and/or a noise artifact. In this way, the location determined by the algorithm does not overlap and/or is not proximate to a noise artifact, ensuring that the EDS analysis does not occur at a position on the sample where there is a small defect, impurity, or geographic anomaly (e.g., crack, micro-deposit, etc.). Once the location is selected, instructions may be set to cause an EDS to conduct EDS analysis of the sample by irradiating the location of the sample corresponding to the selected location.

Examples of inventive subject matter according to the present disclosure are described in the following enumerated paragraphs.
A1. A method for performing HDR charged particle analysis using clustering processes, the method comprising: accessing first image data for a first image of a region of a sample, the first image data having been obtained by a charged particle microscope, and the first image data having been obtained with a first parameter configuration; accessing a second image data for a second image of the region of the sample, the second image data having been obtained by the charged particle microscope system, and the second data having been obtained with a second parameter configuration that is different from the first parameter configuration; generating an HDR charged particle microscopy data structure using the first image data and the second image data; and identifying one or more features of the sample based on the HDR charged particle microscopy data structure.
A1.1. The method of paragraph 1, wherein the HDR charged particle microscopy data structure is generated at least in part by applying a HDR algorithm to at least the first data and the second data.
A1.1.1. The method of paragraph A1.1, wherein the HDR algorithm applies weights to individual pixel values of the first image data and the second image data.
A1.1.1.1. The method of paragraphs A1.1.1, wherein each weight corresponds to the importance of the corresponding individual pixel value, and then determining individual pixel values of the HDR image based on the weight
A1.1.1.2. The method of any of paragraphs A1.1.1- A1.1.1.1, wherein an individual weight for an individual pixel value is based on adjacent pixel values for pixels proximate to the corresponding individual pixel.
A1.1.2. The method of any of paragraphs A1-A1.1.1.2, wherein constructing the HDR charged particle microscopy data structure comprises: converting the first image data into a first charged particle image; converting the second data into a second charged particle image; and applying a HDR algorithm to the first image and the second image to generate an HDR charged particle image.
A1.1.2.1. The method of paragraph A1.1.2, wherein generating the HDR image comprises, generating a first mask that identifies the important regions of the first image, generating a second mask that identifies the important regions of the second image, and generating the HDR based on the first mask and the second mask.
A1.1.2.1.1. The method of paragraph A1.1.2.1, wherein the first mask applies a weight to at least a pixel of the first image.
A1.1.2.2. The method of any of paragraphs A1.1.2-A1.1.2.1.1, wherein the HDR algorithm generates HDR pixel values for individual pixel locations based on pixel values in the first image data and second image data corresponding to the individual pixel locations.
A1.1.2.2.1. The method of paragraph A1.1.2.2, wherein the HDR algorithm determines the HDR pixel values at least in part by averaging the corresponding pixel values in the first image data and second image data corresponding to the individual pixel locations
A1.1.2.2.2. The method of any of paragraphs A1.1.2.2- A1.1.2.2.1, wherein the HDR algorithm further generates the HDR pixel values for individual pixel locations based on additional pixel values corresponding to additional pixel locations surrounding the individual pixel locations.
A1.1.2.2.3. The method of any of paragraphs A1.1.2.2- A1.1.2.2.2, wherein the HDR algorithm determines the HDR pixel values at least in part based on weights assigned to individual pixel values in the first image data and the second image data.
A1.1.2.2.4. The method of any of paragraphs A1.1.2.2- A1.1.2.2.3, wherein the HDR algorithm determines the HDR pixel values at least in part based on a weighted average that takes into account one or more of: weights assigned to individual pixel values in the first image data and the second image data; and additional pixel values corresponding to additional pixel locations surrounding the individual pixel locations.
A1.1.2.2.5. The method of any of paragraphs A1.1.2.2- A1.1.2.2.4, wherein the HDR algorithm generates the HDR pixel values based on pixel values having an associated weight at or above a threshold value.
A1.2. The method of any of paragraphs A1-1.1.2.1.1, wherein the one or more features of the sample are identified at least in part by applying a segmentation algorithm to the HDR charged particle microscopy data structure.
A1.3. The method of any of paragraphs A1-A1.2, wherein constructing the HDR charged particle microscopy data structure comprises generating a multidimensional data structure, where individual values from each image are stored in the multidimensional data structure in association with corresponding pixel locations.
A1.3.1. The method of paragraph A1.3, wherein a first value associated with a first pixel location in the first image is stored in the multidimensional data structure in association with a second pixel value associated with the first pixel location in the second image.
A1.3.2. The method of any of paragraphs A1.3-A1.3.1, wherein identifying the one or more features of the sample comprises applying a segmentation algorithm to the multidimensional data structure.
A1.3.3. The method of any of paragraphs A1.3-A1.3.2, wherein the segmentation algorithm determines HDR pixel values for an HDR charged particle image based at least in part by averaging the corresponding values in the multidimensional data structure associated with the corresponding individual pixel locations.
A1.3.4. The method of any of paragraphs A1.3-A1.3.3, wherein the segmentation algorithm further generates the HDR pixel values for individual pixel locations for the HDR charged particle image based on additional values associated with additional pixel locations surrounding the corresponding individual pixel locations.
A1.3.5. The method of any of paragraphs A1.3-A1.3.4, wherein the segmentation algorithm determines the HDR pixel values at least in part based on weights assigned to individual pixel values in the multidimensional data structure.
A1.3.6. The method of any of paragraphs A1.3-A1.3.5, wherein the segmentation algorithm determines the HDR pixel values at least in part based on a weighted average that takes into account one or more of: weights assigned to individual pixel values in the multidimensional data structure; and additional pixel values in the multidimensional data structure corresponding to additional pixel locations surrounding the individual pixel locations.
A1.3.7. The method of any of paragraphs A1.3-A1.3.6, wherein the segmentation algorithm generates the HDR pixel values based on pixel values having an associated weight at or above a threshold value.
A1.3.8. The method of any of paragraphs A1.3-A1.3.6, wherein the segmentation algorithm generates the HDR pixel values based on a subset of the pixel values associated with the corresponding individual pixel locations.
A1.3.8.1. The method of paragraphs A1.3.8.1, wherein the subset of pixel values corresponds to: a preset number of the pixel values associated with the corresponding individual pixel locations having the highest value; and/or pixel values associated with the corresponding individual pixel locations at or above a threshold value.
A2. The method of any of paragraphs A1-A1.2, wherein identifying the one or more features of the sample based on the HDR charged particle microscopy data structure corresponds to determining a material transition in the sample.
A2.1. The method of paragraph 2, wherein identifying the one or more features of the sample based on the HDR charged particle microscopy data structure corresponds to determining a plurality of material transitions in the sample.
A2.1.1. The method of paragraph 2.1, further comprising generating a segmented HDR image of the sample based on the plurality of material transitions.
A2.1.1.1. The method of paragraph 2.1.1, wherein the segmented HDR image segments regions of the HDR image that correspond to separate material deposits within the sample.
A3. The method of any of paragraphs A1-A2.1.1.1, wherein identifying the one or more features comprises identifying a geometric feature of the sample.
A4. The method of any of paragraphs A1-A3, wherein identifying the one or more features comprises determining a region of the sample that corresponds to a single material deposit.
A5. The method of any of paragraphs A1-A3, wherein the charged particle microscope is an electron microscope.
A5.1. The method of paragraph A5, wherein the first image data and the second image data were each generated based on electron backscatter detected by sensors of the electron microscope.
A6. The method of any of paragraphs A1-A5.1, wherein the difference between the first parameters and the second parameters comprises a difference in contrast, brightness, beam strength, beam type, gamma, and/or a combination thereof.
A7. The method of any of paragraphs A1-A6, wherein the first image data and the second image data were acquired by the charged particle microscope in sequence.
A7.1. The method of paragraph A7, wherein between acquisition of the fist image data and acquisition of the second image data the configuration of the charged particle microscope is changed from the first parameters to the second parameters.
A8. The method of any of paragraphs A1-A6, wherein the first image data and the second image data were acquired in parallel.
A8.1. The method of paragraphs A8, wherein the first image data was detected by a first detector, and the second image data was acquired with a second detector separate from the first detector.
A8.1.1. The method of paragraph A8.1, wherein the first detector and the second detector are different types of detectors.
A8.1.2. The method of any of paragraphs A8.1-A8.1.1, wherein the first detector and the second detector have different configurations, positions, orientations, filters, or a combination thereof.
A8.2. The method of paragraph A8, wherein the first image data and the second image data were detected same with the same detector.
A8.2.1. The method of paragraph A8.2, wherein the first image data was detected with a first portion of the detector, and the second image data was detected with a second portion of the detector.
A8.2.1.1. The method of paragraph A8.2.1., where the first portion of the detector includes a filter that causes the parameters of the first portion to be different from the parameters of the second portion of the detector.
A9. The method of any of paragraphs A1-A8.2.1.1, further comprising causing the charged particle system to obtain at least the first image data and the second image data.
A9.1. The method of paragraph A9, wherein the first image data and the second image data are acquired with a charged particle imaging process.
A10. The method of any of paragraphs A1-A9.1, further comprising accessing a third image data for a third image of the region of the sample, the third image data having been obtained by the charged particle microscope system, the third data having been obtained with a third parameter configuration that is different from the first parameter configuration and the second parameter configuration.
A10.1. The method of paragraph A10, wherein generating the HDR charged particle microscopy data structure is further performed using the third image data.
A11. The method of any of paragraphs A1-A10.1, further comprising accessing a plurality of additional image data for a plurality of additional image of the region of the sample, each additional image data having been obtained by the charged particle microscope system, and each additional image data having been obtained with different parameter configuration.
A11.1. The method of paragraph A11, wherein the HDR charged particle microscopy data structure is further performed using the plurality of additional image data.
A12. The method of any of paragraphs A1-A11.1, further comprising, conducting EDS analysis on the sample based on the identified one or more features.
A12.1. The method of paragraph A12, wherein the EDS analysis comprises determining based on the one or more features, a region of the sample that corresponds to a single material deposit.
A12.2. The method of any of paragraphs A12-A12.1, wherein the EDS analysis comprises: determining a point within the single material deposit; and conducting EDS analysis on the single material deposit by irradiation the determined point.
A12.2.1. The method of paragraph A12.2, wherein determining the point within the single material deposit corresponds finding the point furthest from a boundary of the single material deposit.
A12.2.1.1. The method of paragraph A12.2.1, wherein determining the region of the sample that corresponds to a single material deposit includes applying a smoothing algorithm to the HDR charged particle data structure to remove noise.
A12.2.1.1.1. The method of paragraph A12.2.1.1, wherein finding the point further from the boundary of the single material deposit comprises finding the point that is furthest from the either the boundary of the single material deposit or an instance of noise removed by the smoothing algorithm.
A12.2.2. The method of any of paragraphs A12.2-A12.2.1.1.1, wherein conducting EDS analysis on the single material deposit by irradiation the determined point comprises: detecting spectroscopic emissions emitted due to the single irradiation of the point within the single material deposit; and determining the chemical composition of the single material deposit based on the spectroscopic emissions.
A12.3. The method of any of paragraphs A12-A12.2.2, wherein the EDS analysis comprises determining based on the one or more features, an additional region of the sample that corresponds to an additional single material deposit.
A12.3.1. The method of paragraph A12.3, wherein determining the additional region of the sample that corresponds to an additional single material deposit: determining an additional point within the additional single material deposit; and conducting EDS analysis on the additional single material deposit by irradiation the additional determined point.
A12.4. The method of any of paragraphs A12-A12.3.1, wherein conducting the EDS analysis comprises performing EDS analysis on all material deposits identified based on the one or mor features.
A12.5. The method of any of paragraphs A12-A12.3.1, wherein conducting the EDS analysis comprises performing EDS analysis on a number of material deposits based on size of individual material deposits, shape of the individual material deposits, and/or a predetermined number of individual material deposits.
A12.6. The method of any of paragraphs A12-A12.3.1, wherein conducting the EDS analysis comprises receiving a user selection of a deposit, and causing the charged particle microscope system to automatically perform EDS analysis on the selected deposit to determine its chemical composition.
A12.7. The method of any of paragraphs A12-A12.5, wherein conducting EDS analysis on the sample is an automated process conducted without user input.
B1. A method for performing EHS charged particle analysis using HDR charged particle analysis, the method comprising: accessing first image data for a first image of a region of a sample, the first image data having been obtained by a charged particle microscope, and the first image data having been obtained with a first parameter configuration; accessing a second image data for a second image of the region of the sample, the second image data having been obtained by the charged particle microscope system, and the second data having been obtained with a second parameter configuration that is different from the first parameter configuration; generating an HDR charged particle microscopy data structure using the first image data and the second image data; identifying one or more features of the sample based on the HDR charged particle microscopy data structure; and conducting EDS analysis on the sample based on the identified one or more features.
B1.1. The method of paragraph B1, wherein the EDS analysis comprises determining based on the one or more features, a region of the sample that corresponds to a single material deposit.
B1.2. The method of any of paragraphs B1-B1.1, wherein the EDS analysis comprises: determining a point within the single material deposit; and conducting EDS analysis on the single material deposit by irradiation the determined point.
B1.2.1. The method of paragraph B1.2, wherein determining the point within the single material deposit corresponds finding the point furthest from a boundary of the single material deposit.
B1.2.1.1. The method of paragraph B1.2.1, wherein determining the region of the sample that corresponds to a single material deposit includes applying a smoothing algorithm to the HDR charged particle data structure to remove noise.
B1.2.1.1.1. The method of paragraph B1.2.1.1, wherein finding the point further from the boundary of the single material deposit comprises finding the point that is furthest from the either the boundary of the single material deposit or an instance of noise removed by the smoothing algorithm.
B1.2.2. The method of any of paragraphs B1.2-B1.2.1.1.1, wherein conducting EDS analysis on the single material deposit by irradiation the determined point comprises: detecting spectroscopic emissions emitted due to the single irradiation of the point within the single material deposit; and determining the chemical composition of the single material deposit based on the spectroscopic emissions.
B1.3. The method of any of paragraphs B1-B1.2.2, wherein the EDS analysis comprises determining based on the one or more features, an additional region of the sample that corresponds to an additional single material deposit.
B1.3.1. The method of paragraph B1.3, wherein determining the additional region of the sample that corresponds to an additional single material deposit: determining an additional point within the additional single material deposit; and conducting EDS analysis on the additional single material deposit by irradiation the additional determined point.
B1.4. The method of any of paragraphs B1-B1.3.1, wherein conducting the EDS analysis comprises performing EDS analysis on all material deposits identified based on the one or mor features.
B1.5. The method of any of paragraphs B1-B1.3.1, wherein conducting the EDS analysis comprises performing EDS analysis on a number of material deposits based on size of individual material deposits, shape of the individual material deposits, and/or a predetermined number of individual material deposits.
B1.16. The method of any of paragraphs B1-B1.3.1, wherein conducting the EDS analysis comprises receiving a user selection of a deposit, and causing the charged particle microscope system to automatically perform EDS analysis on the selected deposit to determine its chemical composition.
B1.7. The method of any of paragraphs B1-B1.5, wherein conducting EDS analysis on the sample is an automated process conducted without user input.
B1.8. The method of paragraph B1, wherein the HDR charged particle microscopy data structure is generated at least in part by applying a HDR algorithm to at least the first data and the second data.
B1.8.1. The method of paragraph B1.8, wherein the HDR algorithm applies weights to individual pixel values of the first image data and the second image data.
B1.8.1.1. The method of paragraphs B1.8.1, wherein each weight corresponds to the importance of the corresponding individual pixel value, and then determining individual pixel values of the HDR image based on the weight
B1.8.1.2. The method of any of paragraphs B1.8.1- B1.8.1.1, wherein an individual weight for an individual pixel value is based on adjacent pixel values for pixels proximate to the corresponding individual pixel.
B1.8.2. The method of any of paragraphs B1.1-B1.8.1.2, wherein constructing the HDR charged particle microscopy data structure comprises: converting the first image data into a first charged particle image; converting the second data into a second charged particle image; and applying a HDR algorithm to the first image and the second image to generate an HDR charged particle image.
B1.8.2.1. The method of paragraph B1.8.2, wherein generating the HDR image comprises, generating a first mask that identifies the important regions of the first image, generating a second mask that identifies the important regions of the second image, and generating the HDR based on the first mask and the second mask.
B1.8.2.1.1. The method of paragraph B1.8.2.1, wherein the first mask applies a weight to at least a pixel of the first image.

B1.8.2.2. The method of any of paragraphs B1.8.2- B1.8.2.1.1, wherein the HDR algorithm generates HDR pixel values for individual pixel locations based on pixel values in the first image data and second image data corresponding to the individual pixel locations.
B1.8.2.2.1. The method of paragraph B1.8.2.2, wherein the HDR algorithm determines the HDR pixel values at least in part by averaging the corresponding pixel values in the first image data and second image data corresponding to the individual pixel locations
B1.8.2.2.2. The method of any of paragraphs B1.8.2.2- B1.8.2.2.1, wherein the HDR algorithm further generates the HDR pixel values for individual pixel locations based on additional pixel values corresponding to additional pixel locations surrounding the individual pixel locations.
B1.8.2.2.3. The method of any of paragraphs B1.8.2.2- B1.8.2.2.2, wherein the HDR algorithm determines the HDR pixel values at least in part based on weights assigned to individual pixel values in the first image data and the second image data.
B1.8.2.2.4. The method of any of paragraphs B1.8.2.2- B1.8.2.2.3, wherein the HDR algorithm determines the HDR pixel values at least in part based on a weighted average that takes into account one or more of: weights assigned to individual pixel values in the first image data and the second image data; and additional pixel values corresponding to additional pixel locations surrounding the individual pixel locations.
B1.8.2.2.5. The method of any of paragraphs B1.8.2.2- B1.8.2.2.4, wherein the HDR algorithm generates the HDR pixel values based on pixel values having an associated weight at or above a threshold value.
B1.9. The method of any of paragraphs B1-B1.8.2.1.1, wherein the one or more features of the sample are identified at least in part by applying a segmentation algorithm to the HDR charged particle microscopy data structure.
B.1.10. The method of any of paragraphs B1-B1.9, wherein constructing the HDR charged particle microscopy data structure comprises generating a multidimensional data structure, where individual values from each image are stored in the multidimensional data structure in association with corresponding pixel locations.
B.1.10.1. The method of paragraph B.1.10, wherein a first value associated with a first pixel location in the first image is stored in the multidimensional data structure in association with a second pixel value associated with the first pixel location in the second image.
B.1.10.2. The method of any of paragraphs B.1.10- B.1.10.1, wherein identifying the one or more features of the sample comprises applying a segmentation algorithm to the multidimensional data structure.
B.1.10.3. The method of any of paragraphs B.1.10- B.1.10.2, wherein the segmentation algorithm determines HDR pixel values for an HDR charged particle image based at least in part by averaging the corresponding values in the multidimensional data structure associated with the corresponding individual pixel locations.
B.1.10.4. The method of any of paragraphs B.1.10- B.1.10.3, wherein the segmentation algorithm further generates the HDR pixel values for individual pixel locations for the HDR charged particle image based on additional values associated with additional pixel locations surrounding the corresponding individual pixel locations.
B.1.10.5. The method of any of paragraphs B.1.10- B.1.10.4, wherein the segmentation algorithm determines the HDR pixel values at least in part based on weights assigned to individual pixel values in the multidimensional data structure.
B.1.10.6. The method of any of paragraphs B.1.10- B.1.10.5, wherein the segmentation algorithm determines the HDR pixel values at least in part based on a weighted average that takes into account one or more of: weights assigned to individual pixel values in the multidimensional data structure; and additional pixel values in the multidimensional data structure corresponding to additional pixel locations surrounding the individual pixel locations.
B.1.10.7. The method of any of paragraphs B.1.10- B.1.10.6, wherein the segmentation algorithm generates the HDR pixel values based on pixel values having an associated weight at or above a threshold value.
B.1.10.8. The method of any of paragraphs B.1.10- B.1.10.6, wherein the segmentation algorithm generates the HDR pixel values based on a subset of the pixel values associated with the corresponding individual pixel locations.
B.1.10.8.1. The method of paragraphs B.1.10.8.1, wherein the subset of pixel values corresponds to: a preset number of the pixel values associated with the corresponding individual pixel locations having the highest value; and/or pixel values associated with the corresponding individual pixel locations at or above a threshold value.
B2. The method of any of paragraphs B1- B.1.10.8.1, wherein identifying the one or more features of the sample based on the HDR charged particle microscopy data structure corresponds to determining a material transition in the sample.
B2.1. The method of paragraph B2, wherein identifying the one or more features of the sample based on the HDR charged particle microscopy data structure corresponds to determining a plurality of material transitions in the sample.
B2.1.1. The method of paragraph B2.1, further comprising generating a segmented HDR image of the sample based on the plurality of material transitions.
B2.1.1.1. The method of paragraph B2.1.1, wherein the segmented HDR image segments regions of the HDR image that correspond to separate material deposits within the sample.
B3. The method of any of paragraphs B1-B2.1.1.1, wherein identifying the one or more features comprises identifying a geometric feature of the sample.
B4. The method of any of paragraphs B1-B3, wherein identifying the one or more features comprises determining a region of the sample that corresponds to a single material deposit.
B5. The method of any of paragraphs B1-B3, wherein the charged particle microscope is an electron microscope.
B5.1. The method of paragraph B5, wherein the first image data and the second image data were each generated based on electron backscatter detected by sensors of the electron microscope.
B6. The method of any of paragraphs B1-B5.1, wherein the difference between the first parameters and the second parameters comprises a difference in contrast, brightness, beam strength, beam type, gamma, and/or a combination thereof.
B7. The method of any of paragraphs B1-B6, wherein the first image data and the second image data were acquired by the charged particle microscope in sequence.
B7.1. The method of paragraph B7, wherein between acquisition of the fist image data and acquisition of the second image data the configuration of the charged particle microscope is changed from the first parameters to the second parameters.
B8. The method of any of paragraphs B1-B6, wherein the first image data and the second image data were acquired in parallel.
B8.1. The method of paragraphs B8, wherein the first image data was detected by a first detector, and the second image data was acquired with a second detector separate from the first detector.
B8.1.1. The method of paragraph B8.1, wherein the first detector and the second detector are different types of detectors.
B8.1.2. The method of any of paragraphs B8.1-B8.1.1, wherein the first detector and the second detector have different configurations, positions, orientations, filters, or a combination thereof.
B8.2. The method of paragraph B8, wherein the first image data and the second image data were detected same with the same detector.
B8.2.1. The method of paragraph B8.2, wherein the first image data was detected with a first portion of the detector, and the second image data was detected with a second portion of the detector.
B8.2.1.1. The method of paragraph B8.2.1., where the first portion of the detector includes a filter that causes the parameters of the first portion to be different from the parameters of the second portion of the detector.
B9. The method of any of paragraphs B1-B8.2.1.1, further comprising causing the charged particle system to obtain at least the first image data and the second image data.
B9.1. The method of paragraph B9, wherein the first image data and the second image data are acquired with a charged particle imaging process.
B10. The method of any of paragraphs B1-B9.1, further comprising accessing a third image data for a third image of the region of the sample, the third image data having been obtained by the charged particle microscope system, the third data having been obtained with a third parameter configuration that is different from the first parameter configuration and the second parameter configuration.
B10.1. The method of paragraph B10, wherein generating the HDR charged particle microscopy data structure is further performed using the third image data.
B11. The method of any of paragraphs B1-B10.1, further comprising accessing a plurality of additional image data for a plurality of additional image of the region of the sample, each additional image data having been obtained by the charged particle microscope system, and each additional image data having been obtained with different parameter configuration.
B11.1. The method of paragraph B11, wherein the HDR charged particle microscopy data structure is further performed using the plurality of additional image data.
C1. A system for performing HDR charged particle analysis using clustering processes, the system comprising: a sample holder configured to support a sample; a focused charged beam source configured to apply a focused charged beam to the sample; a detector system configured to detect emissions from the sample due to irradiation with the charged particle beam source; one or more processors; and memory storing non-transitory computer readable instructions that, when executed by the one or more processors, cause the one or more processors to perform the method of any of paragraphs A1-A12.7 and/or B1-B11.1.
C2. The system of paragraph C1, further comprising an EDS system.
D1. Use of the system of any of paragraphs C1-C2 to perform the method of any of paragraphs A1-A12.7 and/or B1-B11.1.
E1. A non-transitory computer readable media that stores instructions that, when executed by a processor, causes the processor to initiate the performance of the method of any of paragraphs A1-A12.7 and/or B1-B11.1.
F1. Use of the non-transitory computer readable media of paragraph F1 to perform the method of any of paragraphs A1-A12.7 and/or B1-B11.1.

## Claims

1. A method for performing HDR charged particle analysis using clustering processes, the method comprising:
accessing first image data (306) for a first image of a region of a sample (104), the first image data having been obtained by a charged particle microscope (102, and the first image data having been obtained with a first parameter configuration;
accessing a second image data (306) for a second image of the region of the sample, the second image data having been obtained by the charged particle microscope system, and the second data having been obtained with a second parameter configuration that is different from the first parameter configuration;
generating an HDR charged particle microscopy data structure (400) using the first image data and the second image data; and
identifying one or more features of the sample (314) based on the HDR charged particle microscopy data structure.

2. The method claim 1, wherein constructing the HDR charged particle microscopy data structure comprises:
converting the first image data into a first charged particle image;
converting the second data into a second charged particle image; and
applying a HDR algorithm to the first image and the second image to generate an HDR charged particle image.

3. The method claim 2, wherein generating the HDR image comprises:
generating a first mask that identifies the important regions of the first image;
generating a second mask that identifies the important regions of the second image; and
generating the HDR based on the first mask and the second mask.

4. The method of any of claims 1-3, wherein constructing the HDR charged particle microscopy data structure comprises generating a multidimensional data structure, where individual values from each image are stored in the multidimensional data structure in association with corresponding pixel locations..

5. The method of claim 4, wherein identifying the one or more features of the sample comprises applying a segmentation algorithm to the multidimensional data structure.

6. The method of claim 5, wherein the segmentation algorithm further generates the HDR pixel values for individual pixel locations for the HDR charged particle image based on additional values associated with additional pixel locations surrounding the corresponding individual pixel locations.

7. The method of claim 5, wherein the segmentation algorithm generates the HDR pixel values based on pixel values having an associated weight at or above a threshold value.

8. The method of any of claims 1-7, wherein identifying the one or more features of the sample based on the HDR charged particle microscopy data structure corresponds to determining a material transition in the sample.

9. The method of claim 8, further comprising generating a segmented HDR image of the sample based on the determined material transition in the sample.

10. The method of any of claims 1-9, wherein the difference between the first parameters and the second parameters comprises a difference in contrast, brightness, beam strength, beam type, gamma, and/or a combination thereof.

11. The method of any of claims 1-10, wherein the first image data and the second image data were acquired by the charged particle microscope in sequence, and wherein between acquisition of the fist image data and acquisition of the second image data the configuration of the charged particle microscope is changed from the first parameters to the second parameters.

12. The method of any of claims 1-10, wherein the first image data and the second image data were acquired in parallel.

13. The method of any of claims 1-12, further comprising accessing a third image data for a third image of the region of the sample, the third image data having been obtained by the charged particle microscope system, the third data having been obtained with a third parameter configuration that is different from the first parameter configuration and the second parameter configuration, and wherein generating the HDR charged particle microscopy data structure is further performed using the third image data.

14. The method of claims 1-13, further comprising, conducting EDS analysis on the sample based on the identified one or more features.

15. The method of claim 14, wherein the EDS analysis comprises:
determining a point within the single material deposit; and
conducting EDS analysis on the single material deposit by irradiation the determined point.
